# EUROPÄISCHE PATENTSCHRIFT

(11) **EP 0 484 362 B1**
(45) Veröffentlichungstag und Bekanntmachung des Hinweises auf die Patenterteilung: **18.05.1994**
(21) Anmeldenummer: 90910734.4
(22) Anmeldetag: 28.07.1990
(51) Int. Cl.: G06F 15/20

(54) **VERFAHREN ZUR ZUORDNUNG VON DATENSÄTZEN ZU ZEITWERTEN EINER ZEITLICHEN REIHENFOLGE**
PROCESS FOR ALLOCATING DATA SETS TO TIME VALUES OF A CONSECUTIVE SEQUENCE
PROCEDE POUR L'AFFECTATION D'ENSEMBLES D'INFORMATIONS A DES VALEURS TEMPORELLES D'UNE SUITE CHRONOLOGIQUE

(30) Priorität: 28.07.1989 DE 3925168
(43) Veröffentlichungstag der Anmeldung: 13.05.1992
(73) Patentinhaber: Quilitz, Udo, 63637 Jossgrund (DE)
(72) Erfinder: Quilitz, Udo, 63637 Jossgrund (DE)
(74) Vertreter: Stoffregen, Hans-Herbert, Dr. Dipl.-Phys.
(86) Internationale Anmeldenummer: EP9001236
(87) Internationale Veröffentlichungsnummer: WO9102316

(56) Entgegenhaltungen:
- EP-A- 0 306 965

## Beschreibung

Die Erfindung bezieht sich auf ein Verfahren zur Zuordnung von Datensätzen zu Zeitwerten einer zeitlichen Reihenfolge.

Die Daten von Aktivitäten werden häufig in Sätzen gespeichert, die auf eine Zeitachse bezogen sind. Die Aktivitäten können in übersichtlicher Form mit Balkendiagrammen dargestellt werden. Hieraus lassen sich schnell Beginn und Ende sowie Überschneidungen von Einzelaktivitäten erkennen. Darartige Einzelaktivitäten können sich beispielsweise auf die Belegung von Hotelräumen oder auf den Einsatz von Personal für verschiedene Arbeiten beziehen.

Es kommt vor, daß Datensätze in verschiedenen Dateien den Zeitwerten zugeordnet sind. Müssen Datensätze geändert werden oder vermindert bzw. vermehrt sich die Anzahl der Datensätze, dann sind hiermit häufig umständliche Abstimmungsarbeiten notwendig, bis die richtige Zuordnung vorhanden ist. Insbesondere können sich Schwierigkeiten bei einer Reduzierung oder Zunahme ergeben.

Ein Verfahren der eingangs genannten Art ist der EP-A- 0 306 965 zu entnehmen, um mittels einer Datenverarbeitung eine Koordinierung von Vorgängen zu erreichen.

Der Erfindung liegt die Aufgabe zugrunde, ein Verfahren zur Zuordnung von Datensätzen zu Zeitwerten einer zeitlichen Reihenfolge zu entwickeln, mit dem Änderungen, Erweiterungen oder Verminderungen der auf die Zeitwerte bezogenen Daten ohne großen Aufwand berücksichtigt werden können.

Die Aufgabe wird erfindungsgemäß dadurch gelöst, daß die Zeitwerte jeweils als Datenstrings in einem Feld gespeichert werden, daß die Auslesung eines Zeitwerts mit dem Anfang des Datenstrings beginnt und bis zum ausgewählten Zeitwert erfolgt und daß der Zeit der Auslesung vom Anfang des Datenstrings bis zum ausgewählten Zeitwert jeweils eine Speicheradresse zugeordnet ist, die mindestens einen Datensatz adressiert. Ein derartiger Datenstring ist im Rahmen der Speicherkapazität des vorgesehenen Felds beliebig vergrößerbar und verkleinerbar. Es kann also sehr schnell und einfach die Länge einer Zeitachse festgelegt, ausgelesen und dargestellt werden. Die Erweiterung erhöht und die Verminderung der Zeitachse reduziert die Anzahl der notwendigen Adressen.

Vorzugsweise ist im Datenstring jeweils eine Gruppe von Bits zur Unterscheidung der Einheiten der Zeitfolge vorgesehen. Jede Einheit der Zeitachse ist hierbei durch das gleiche Bitmuster bestimmt. Hiermit können vielstellige Zeitwerte mit geringem Aufwand an Speicherkapazität abgespeichert werden. Bei einer zweckmäßigen Ausführungsform werden die Zeitwerte als Balkendiagramm interaktiv auf einem Bildschirm eines Digitalrechners dargestellt. Die Auswahl bestimmter Adressen kann hierbei auf einfache Weise durch die Länge eines Balkendiagramms erfolgen. Außerdem ist über die Länge des Balkendiagramms der benötigte Adressenvorrat festlegbar. Besonders günstig ist es, wenn die durch die Auslesezeit des Datenstrings gebildete Adresse in mindestens einem Befehl des Digitalrechners eingefügt wird. Hierdurch können die Datensätze, die durch die ausgewählte Adresse zugänglich sind, in der durch den Befehl vorgegebenen Art verändert werden. Es ist also eine schnelle und einfache Änderung der Datensätze möglich.

Vorzugsweise wird der Beginn und das Ende eines Datenstrings über die Darstellung eines Balkendiagramms auf dem Bildschirm festgelegt, indem ein Cursor auf der entsprechenden Stelle positioniert wird.

Der Cursor kann mit Hilfe einer Maus, d.h. mittels eines auf einem Tisch verschiebbaren, an den jeweiligen Digitalrechner angeschlossenen Steuergerät positioniert werden. Die Bedienung wird hiermit noch weiter vereinfacht.

Die oben beschriebenen Maßnahmen lassen sich vorteilhafterweise bei Buchungssystemen einsetzen. Buchungssysteme werden z.B. für die Platzreservierung in Bussen Eisenbahnen, Flugzeugen und Schiffen sowie für die Hotelzimmerreservierung eingesetzt.

Die Erfindung wird im folgenden an Hand eines in einer Zeichnung dargestellten Ausführungsbeispiels näher beschrieben, aus dem sich weitere Einzelheiten, Merkmale und Vorteile ergeben.

Es zeigen:
- Fig. 1: ein Diagramm des zeitlichen Auftretens der Bits eines Datenstrings unter Zuordnung zu Adressen von Speicherplätzen einer Datei,
- Fig. 2 a bis e: Diagramme von Verfahrensschritten zur Verwaltung eines Zimmerreservierungssystems,

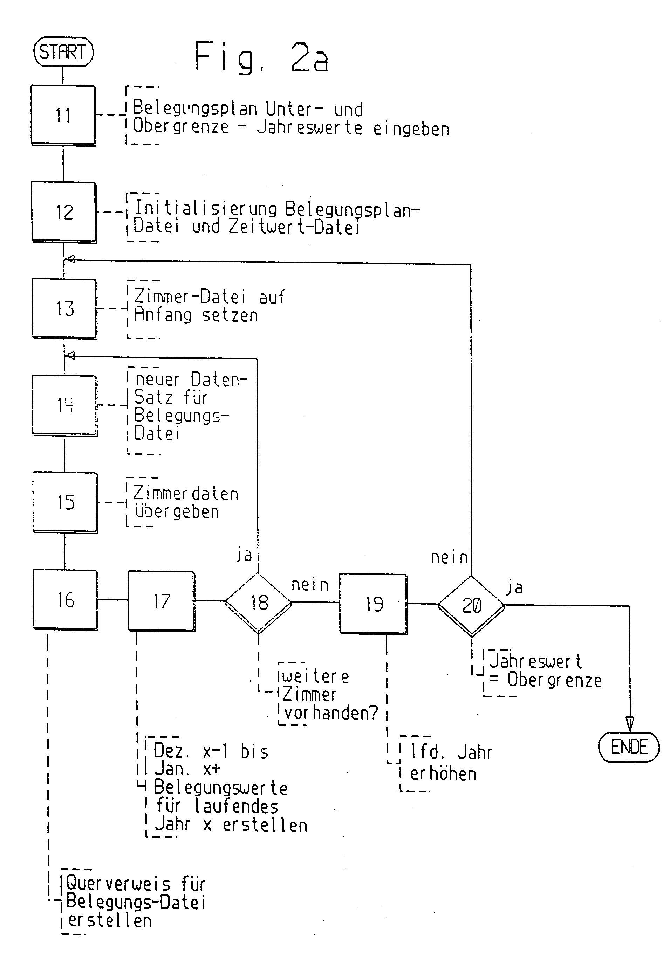

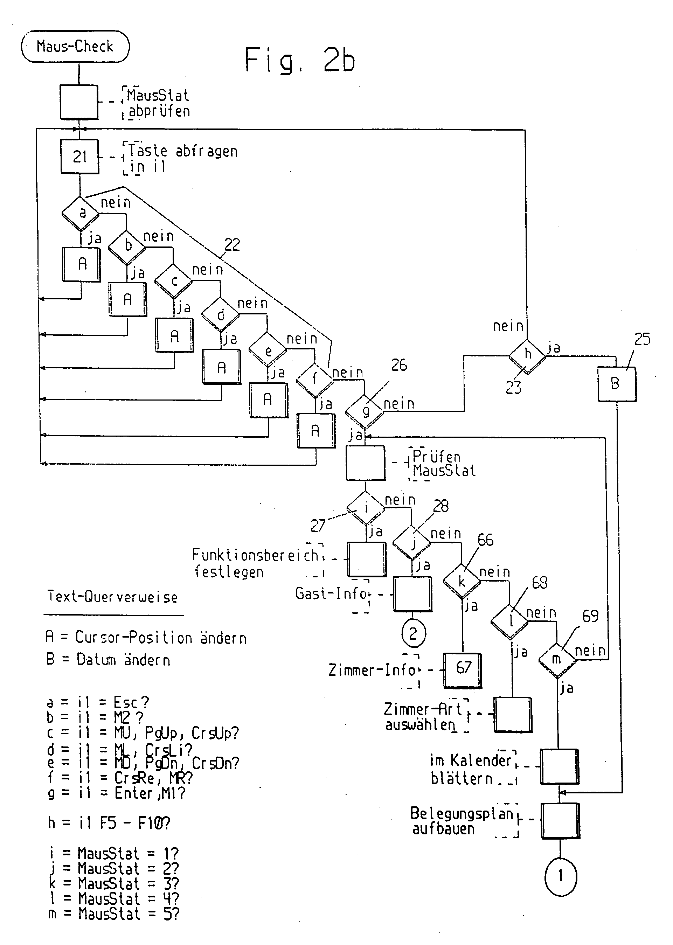

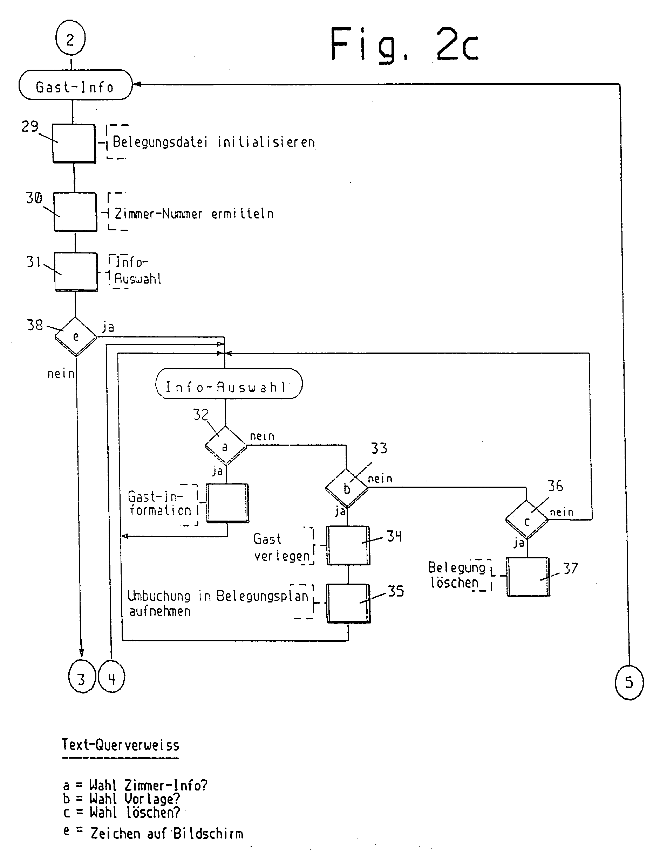

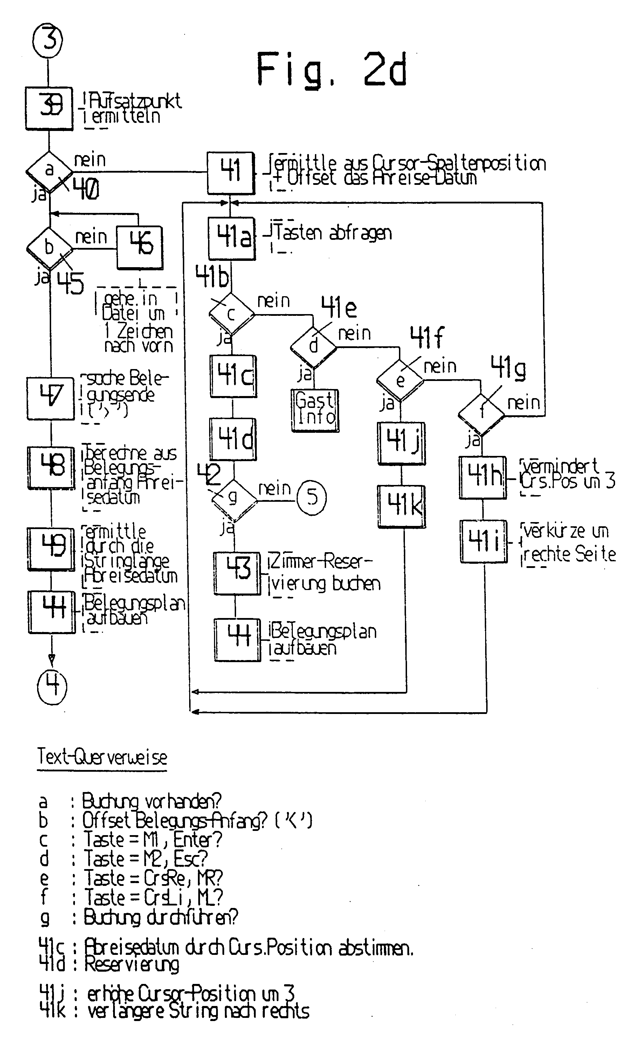

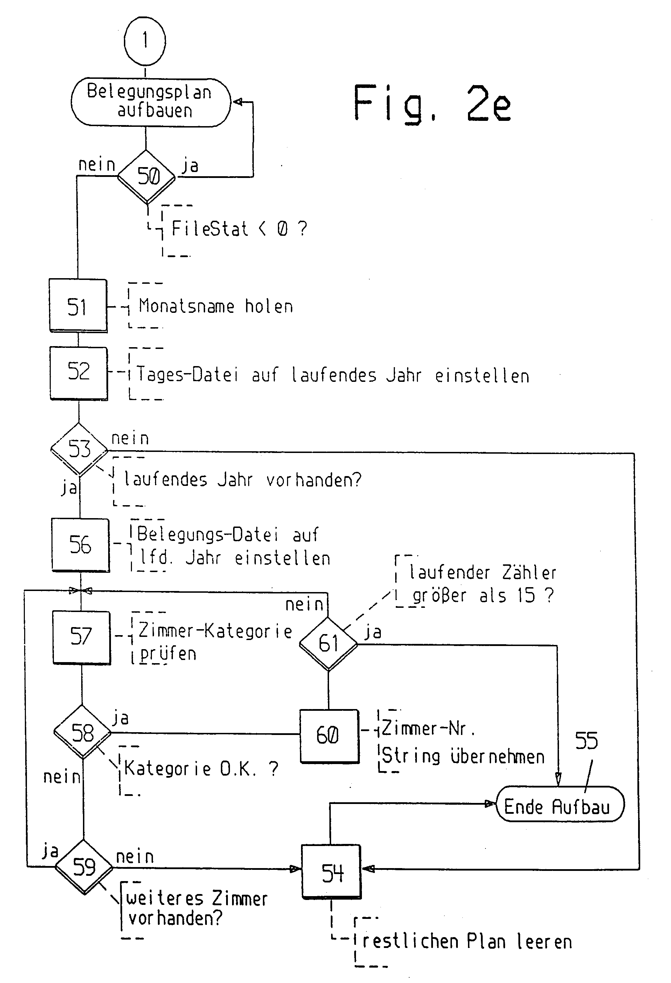

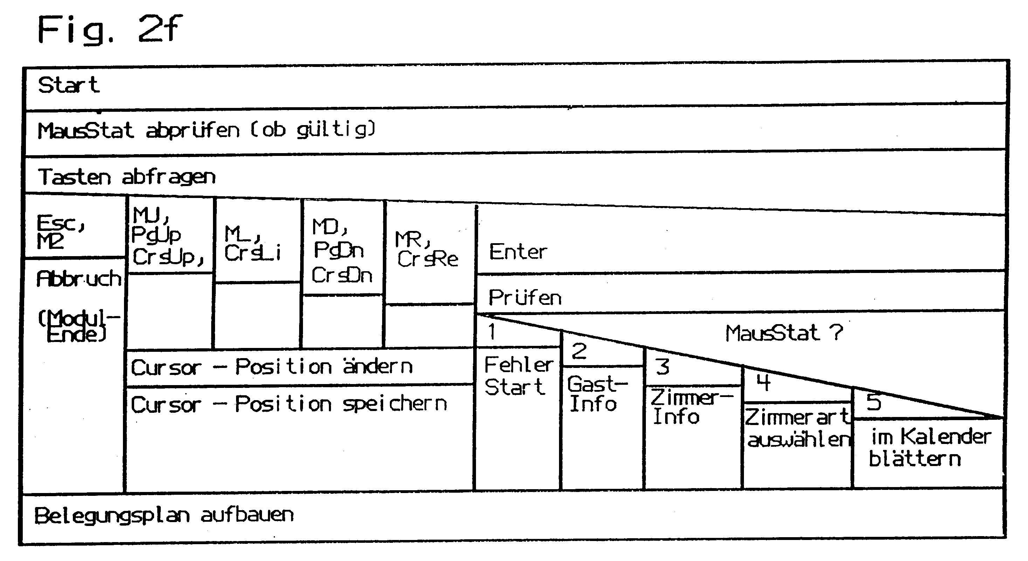

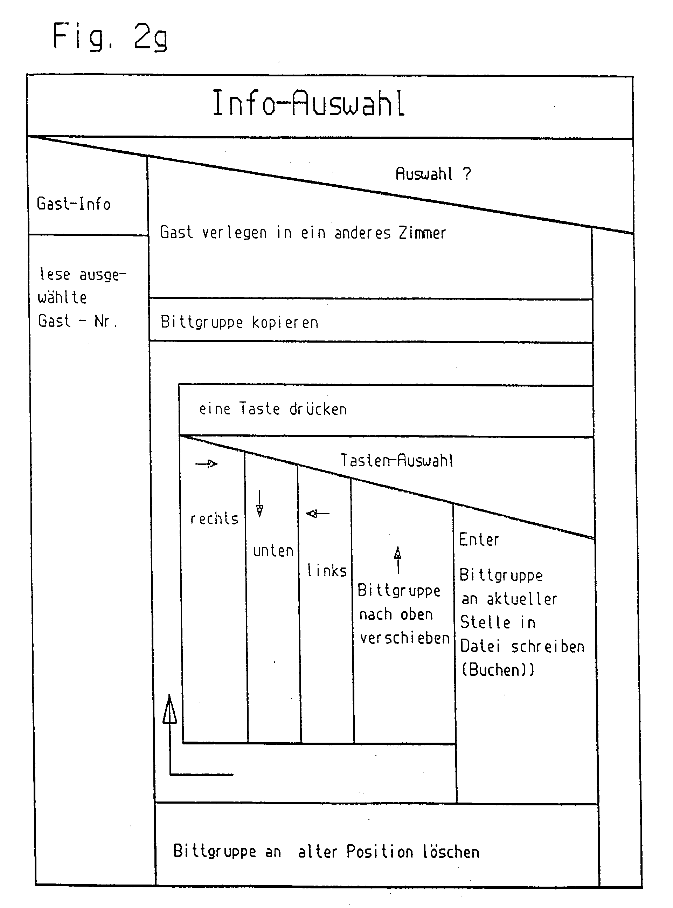

- Fig. 2 f: ein Struktogramm mit den bei einer Tastenabfrage ablaufenden Vorgängen,
- Fig. 2 g: ein Struktogramm für bei einer Belegungsplanänderung ablaufende Vorgänge,

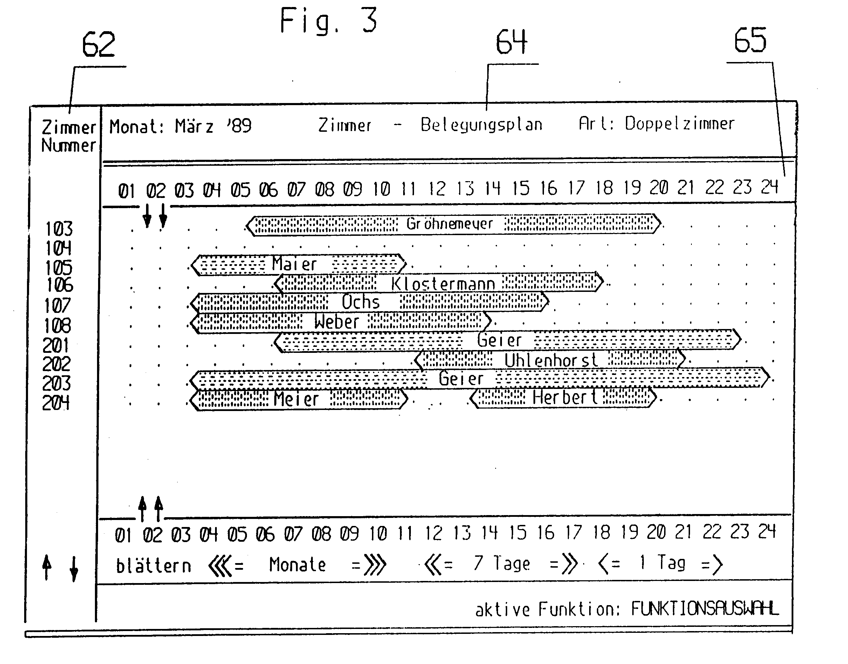

- Fig. 3: eine Bildschirmdarstellung eines Zimmerbelegungsplans und

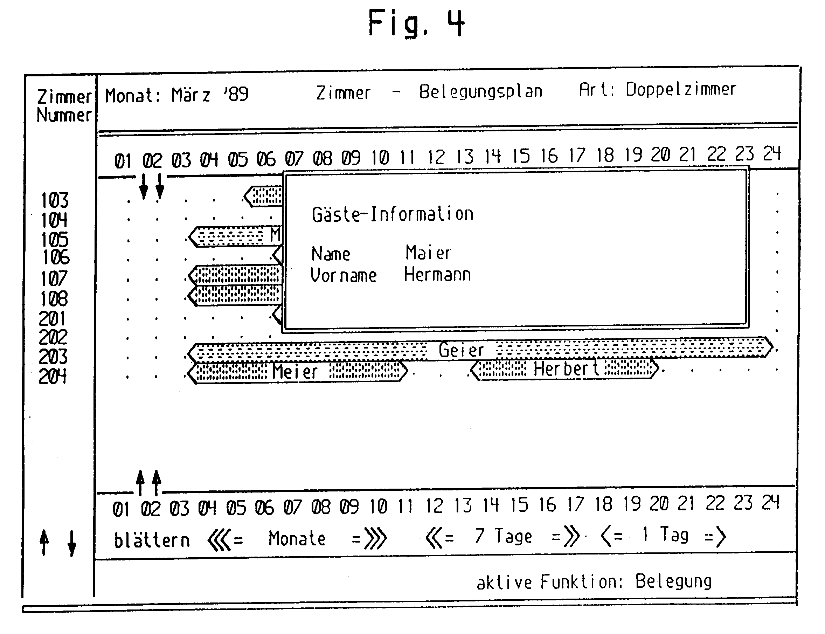

- Fig. 4: eine Bildschirmdarstellung einer Gäste-Information entsprechend der Zimmerbelegung.

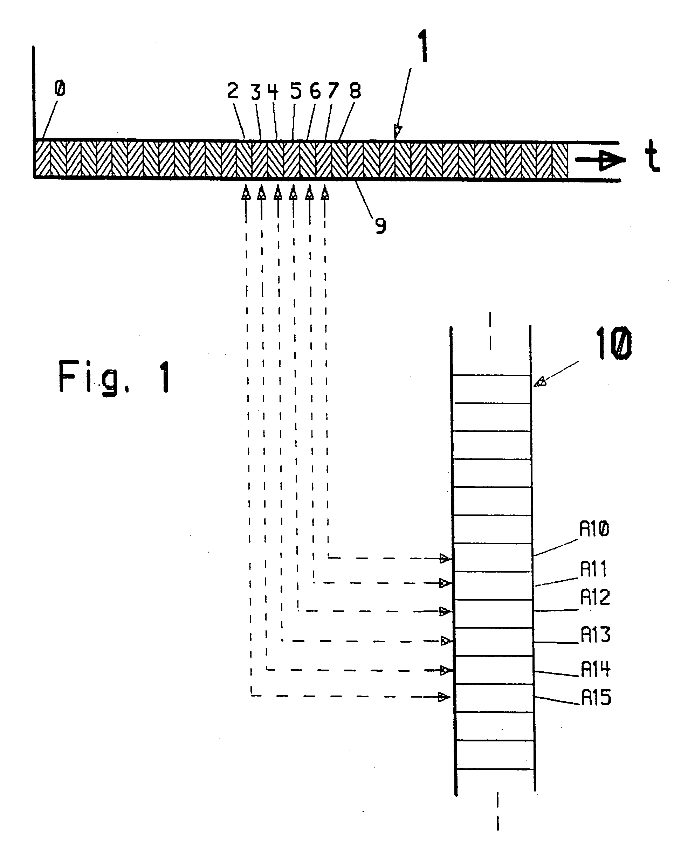

In Fig. 1 ist ein Datenstring (1) dargestellt, der aus Bitgruppen besteht, von denen nur die Bitgruppen (2), (4), (5), (6), (7), (8), (9) bezeichnet sind. Jede Bitgruppe enthält mindestens ein Bit. Es können aber auch mehr sein. Der Datenstring ist in einem Feld eines Speichers eines Digitalrechners abgespeichert. Die einzelnen Bitgruppen z.B. (2) bis (9) sind auf die erste Bitgruppe (0) bezogen. Jeder Bitgruppe entspricht ein Zeitwert, z.B. ein Tag eines Monats. Dem Datenstring (1) entsprechen z.B. alle Tage eines Monats. Es ist nicht jeder Tag als Absolutwert sondern als eine Bitgruppe, die einer Tageseinheit zugeordnet ist, zusammen mit den anderen Bitgruppen gespeichert. Die Auslesung eines einem bestimmten Tag zugeordneten Werts beginnt mit der Bitgruppe (0) und endet mit der dem jeweiligen Tag zugeordneten Bitgruppe.

Die Auslesedauer nimmt zu, je länger die ausgewählte Bitgruppe ist. Den Auslesezeiten der verschiedenen Tage eines Monats sind jeweils verschiedene Adressen zugeordnet, bei denen es sich z.B. um Adressen einer Datei (10) handelt. In Fig. 1 sind Speicherzellen der Datei (10) dargestellt. Es sind die Adressen einer Reihe von Speicherzellen mit (A 10) bis (A 15) bezeichnet. Diese Adressen entsprechen z.B. jeweils den Auslesezeiten einer der Bitgruppen (2) bis (7). Der Datenstring (1) ist in seinen verschiedenen Bitgruppen somit verschiedenen Zeitwerten zugeordnet, denen wiederum eine Anzahl von Datensätzen entsprechen, die über den Zeitwerten entsprechende Adressen zugänglich sind.

Die Bitgruppen des Datenstrings (1) werden bei der Auslesung aus dem Feld, beginnend mit der Bitgruppe (0), auf einem Bildschirm eines Digitalrechners als Balkendiagramm dargestellt, das beendet wird, wenn die ausgewählte Zeit angezeigt worden ist. Die Auswahl kann z.B. mit einem Cursor erfolgen. Der Auslesezeit ist eine bestimmte Adresse zugeordnet, in der sich mindestens ein Datensatz befindet, der ausgelesen, dargestellt bzw. verändert werden kann. Auf diese Weise ist es interaktiv möglich, auf eine zeitliche Reihenfolge bezogene Daten schnell und einfach auszuwählen, um sie z.B. anzuzeigen, zu verändern oder auf den neuesten Stand zu bringen. Der Datenstring (1) kann im Rahmen eines hierfür reservierten Speicherbereichs beliebig vergrößert oder verkleinert werden. Die Länge einer Zeitachse läßt sich somit schnell und einfach festlegen. Damit sind über die entsprechenden Adressen auch die Datensätze festgelegt, die z.B. beeinflußt werden sollen. Die über die Zeitachse ausgewählten Adressen werden in Befehle eingefügt, die z.B. über die Tasten einer Tastatur vorgegeben werden, um Datensätze auszulesen, umzugruppieren oder deren Aufbau und Inhalt zu verändern.

Das oben beschriebene Verfahren kann vorteilhafterweise mit einem Personal-Computer durchgeführt werden. Als Eingabemedium können Tastatur, eine Maus oder ein Lichtgriffel (Light Pen) angeschlossen werden. Die Maus, ein kastenähnliches Steuergerät, das über ein Kabel mit dem Computer verbunden ist, wird auf der Oberfläche eines Tisches verschoben. Parallel hierzu bewegt sich der Cursor auf dem Bildschirm des Computers. Bei einem Lichtgriffel wird auf dem Bildschirm die gewünschte Position "angekreuzt" , der Cursor wird auf die entsprechende Stelle projiziert. Der Cursor kann so auf eine bestimmte Stelle geleitet werden, an der z.B. das Balkendiagramm des Datenstrings (1) beendet werden soll.

Das oben beschriebene Verfahren kann vorteilhafterweise mit einem Personal-Computer durchgeführt werden, an den eine Maus angeschlossen ist. Die Maus, ein kastenähnliches Steuergerät, das über ein Kabel mit dem Computer verbunden ist, wird auf der Oberfläche eines Tisches verschoben. Parallel hierzu bewegt sich der Cursor auf dem Bildschirm des Computers. Der Cursor kann auf eine bestimmte Stelle geleitet werden, an der das Balkendiagramm des Datenstrings (1) beendet werden soll.

In den Fig. 2a bis 2d ist die Anwendung des oben beschriebenen Verfahrens bei einem Zimmerreservierungssystem für Hotels dargestellt. Für das Zimmerreservierungssytem sind eine Zimmerdatei, eine Belegungsplandatei und Zeitwertdateien vorgesehen. Die Zimmerdatei enthält die Zimmerkategorie und eine Beschreibung, die sich z.B. auf die Lage, Stockwerk, Hof- oder Straßenseite und dergleichen bezieht. In der Belegungsplandatei sind die Zimmerbelegung für einen bestimmten Zeitraum und die Namen bzw. Adressen der Gäste angegeben. Die Zeitwertdateien enthalten Datenstrings jeweils für Jahre, Monate und Tage. In einer Gästedatei sind Namen und Adressen, Staatsangehörigkeit, Paß-Nr., Telefon und gegebenenfalls Firma und Anrede gespeichert.

Vor dem Aufbau und der Darstellung eines Belegungsplans für die Zimmer muß zuerst der Kalender für den Belegungsplan generiert werden. Der Kalender wird erzeugt, indem nach dem in Fig. 2a dargestellten Start in einem ersten Schritt (11) die zeitliche Unter- und Obergrenze in Jahreswerten in den Computer eingegeben wird. Danach wird in einem Schritt (12) die Belegungsplandatei und die Zeitwertdatei initialisiert. Die Zimmerdatei wird anschließend in einem Schritt (13) auf den Anfang gesetzt. Beginnend mit dem vorgegebenen Zimmer wird hierauf in einem Schritt (14) ein neuer Datensatz für den Belegungsplan erstellt, indem im Schritt (15) die Zimmerdaten des entsprechenden Zimmers in die Datei eingefügt werden. Im nachfolgenden Schritt (16) wird ein Querverweis für die Belegungsplandatei erstellt. Ein weiterer Schritt (17) ermöglicht die Auswahl von Monaten, indem für die Eingaben Dezember x-1 und Januar x+1 der gewünschte x-Wert eingegeben wird. Damit werden die Belegungswerte für das jeweilige Zimmer und den angegebenen Zeitraum erstellt. Nach der Erstellung der Belegungswerte für das jeweilige Zimmer wird im nachfolgenden Schritt (18) geprüft, ob noch weitere unbelegte Zimmer vorhanden sind. Trifft dies zu, dann werden für das weitere ausgewählte Zimmer die Schritte 14 bis 17 wiederholt. Wenn keine zu belegenden Zimmer mehr vorhanden sind, schließt sich ein Schritt (19) an den Schritt (18) an. Im Schritt (19) wird der Jahreswert um 1 erhöht. Hierauf folgt in einem Schritt (20) die Prüfung, ob der neue Jahreswert gleich der im Schritt (11) eingegebenen Obergrenze ist. Ist dies nicht der Fall, dann werden der Schritt (13) und die weiteren Schritte für den neuen Jahreswert wiederholt. Wenn die Obergrenze erreicht ist, dann ist die Generierung des Kalenders zu Ende. Die Schritte (11) bis (20) sind aus einzelnen Verfahrensschritten zusammengesetzt, die in den Ablaufplänen der Fig. 2 b bis 2 e sowie den in Fig. 2 f und 2 g dargestellten Struktogrammen gezeigt sind. Die Ablaufpläne enthalten dabei die einzelnen Verfahrensschritte in Blockform mit den dazugehörigen Erläuterungen.

Der Aufbau und die Darstellung verschiedener im Zusammenhang mit dem Reservierungssystem notwendiger und/oder vorteilhafter Informationen geschieht mit Hilfe der Maus-Steuerung, die in Fig. 2b dargestellt ist. Mittels der Maus wird der Cursor auf dem Bildschirm nach rechts, links, oben oder unten bewegt. Die Bewegungsrichtung hängt von vorgebbaren Tastereingaben ab, die nacheinander abgefragt werden. Die Abfrage der Tasten für die Maus-Steuerung ist in Fig. 2b mit dem Verfahrensschritt (21) bezeichnet, unter dem eine Reihe von Verfahrensschritten zu verstehen ist, von denen nachstehend solche, die wichtig sind, im einzelnen erläutert werden.

In einem Schritt (22) wird die Tasteneingabe aus einem Verfahrensschritt (21) geprüft und eine entsprechende Bewegung mit dem Cursor veranlaßt. Es sind dies 4 Richtungen zum Bewegen (hoch, tief, links, rechts), sowie eine Möglichkeit zum Verlassen des Planes und eine zur weiteren Bearbeitung innerhalb des Reservierungssystems. Diese Schritte werden unabhängig, ob Tastatur, Maus oder Lichtgriffel (Light Pen) benutzt werden, geprüft und ausgeführt.

In Abhängigkeit von bestimmten Funktionstasten (Fig. 2 b oder 2 f) (F3) bis (F10)) können frei definierbare Sprünge innerhalb der Zeitwerte ausgeführt werden, d.h. es kann innerhalb des Reservierungssystems in bestimmten Intervallen "geblättert" werden: (hier: tages-, wochen-, monatsweise, andere Systeme: minuten-, stunden- und tagesweise).

Die Schritte (21) bis (25) dienen somit dazu, eine bestimmte zeitliche und räumliche Position (hier z.B. Zimmer - Nr. 105 am 17.7.89) möglichst schnell und bequem zu erreichen.

Im folgenden Schritt (26) wird abgeprüft, ob die Taste "ENTER" gedrückt wurde. Wenn ja, kann nun an der augenblicklichen Position eine weitere Verarbeitung vorgenommen werden, u.a. Belegungen löschen/ändern/neu anlegen (Fig. 2).

Im Schritt (26) wird aufgrund der Cursorkoordinaten und der anvisierten Bitgruppe eine Funktionsauswahl durchgeführt. Sie bestimmt dann das weitere Vorgehen innerhalb des Reservierungssystems. Je nach Cursorposition wird einer Variablen, hier Funktionswert genannt, ein vereinbarter Wert zugewiesen. Dieser Wert wiederum entscheidet die nächste Verarbeitung. Im Beispiel Belegungsplan können diesem Funktionswert die vereinbarten Werte 1 bis 5 zugewiesen werden, die je in Verfahrensschritten (27), (28), (66), (68) und (69) geprüft werden. Auf diese fünf Werte folgen fünf vereinbarte mögliche Verarbeitungen:
"1" Initialisierung des Funktionswertes, Wert nach nicht vereinbarten Tasteneingaben.
"2" Zeigt Informationen über Gast des Zimmers, dessen Belegung (Datenstring) ausgewählt wurde und ermöglicht drei Verarbeitungen (Fig. 2c, d, g):
   a) Es können die persönlichen Daten des Gastes abgerufen werden,
   b) die Belegung kann in ein anderes Zimmer oder auf ein anderes Datum verschoben werden (Schritte (34) und (35)),
   c) die Belegung kann ganz gelöscht werden (Schritte (36), (37), Fig. 2c).
      Die Schritte (44) bis (49) ermitteln die entsprechenden Zeitwerte für Anfang und Ende der Bitgruppe. Sind jedoch auf dem Bildschirm an der gleichen Cursorposition die Bitgruppen mit dem vereinbarten Muster für "Zimmer frei" markiert, kann nun eine neue Zimmerbelegung manuell durchgeführt werden. Hierzu wird mit Hilfe von Tastatur, Maus oder Lichtgriffel eine Bitgruppe als "belegt" gekennzeichnet (Fig. 2d, Schritte (41a) bis (41k)). Die zugehörigen Zeitwerte werden vom Computer (BfZ-EPROM) ermittelt.
"3" Es können Informationen über ein ausgewähltes Zimmer abgerufen werden.
"4" bewirkt einen Neuaufbau des Bildschirms, nachdem eine Einflußgröße geändert wurde (hier: Wechsel der Zimmerkategorie).
"5" erlaubt die Änderung der Zeitwert-Bereiche (hier z.B. Vor- oder Zurückblättern um eine Woche/Monat/Tag).

In Fig. 2d wird nach der Tastenabfrage (41a) aufgrund des ermittelten Offsets aus Schritt (41) die optische Gestaltung einer zu modifizierenden Bitgruppe, beginnend ab Offset, durchgeführt. Die möglichen Tasteneingaben (41b), (41e), (41f) und (41g) bewirken folgende mögliche Veränderungen an der Bitgruppe:
(41b): Die gewünschte Bereichsgröße der Bitgruppe ist erreicht und kann nun als Reservierung verarbeitet werden.
(41e): Die Formatierung wird abgebrochen, die Bearbeitung wird abgebrochen.
(41f): Die zu modifizierende Bereichsgröße der Bitgruppe wird um eine Zeiteinheit (hier: um einen Tag) erweitert.
(41g): Die zu modifizierende Bereichsgröße der Bitgruppe wird um eine Zeiteinheit verkleinert.

Nachdem man die gewünschte Bitgruppe erstellt hat, wird mit Schritt (42) fortgefahren und die veränderte Bitgruppe als Reservierung/Buchung eingetragen. Anschließend wird der Belegungsplan in seiner nun aktualisierten Form aufgebaut (Schritt (44)), d.h. die veränderten Inhalte der Bitgruppen werden auf dem Display gezeigt.

Erster Schritt beim Belegungsplan-Aufbau (Fig. 2e) ist die Überprüfung in Schritt (50), ob eine ordentlich initialisierte Belegungsdatei aktiv ist (variable FileStat). Schritt (51) ermittelt aus der Monatszahl (z.B. 05) den zugehörigen Monatsnamen (Mai). Die Tagesdatei wird auf das laufende Jahr eingestellt, d.h. u.a. Prüfung, ob Schaltjahr. Die Prüfung in Schritt (53) stellt sicher, das für das gewünschte Jahr der Belegungsplan generiert ist. Ist dies nicht der Fall, wird ein leerer Plan gezeigt (Schritt (54)). Ansonsten werden für das laufende Jahr und die ausgewählte Einflußgröße (hier: Zimmerkategorie, Schritt (57)) alle zugehörigen Zimmer nacheinander aufgezeigt. Sind alle Zimmer einer Kategorie aufgezeigt (Schritt (59)), wird der Rest des Bildschirms durch Leerstrings aufgefüllt (Schritt (54)). Stimmt die Zimmerkategorie überein, wird für den ausgewählten Zeitraum ein Datenstring aus der Bitgruppe übernommen und auf dem Bildschirm angezeigt.

Nach Aufzeigen der Bitgruppe in Schritt (60) wird ein Zähler in Schritt (61) erhöht. Überschreitet er den hier vereinbarten Wert (15), wird der Aufbau des Belegungsplanes abgebrochen, da der Bildschirm voll ist. Die noch folgenden Zimmer können durch Maussteuerung (Schritt (66), Fig. 2b) auf den Bildschirm projiziert werden.

In Fig. 3 ist ein ausgewählter Teil eines Belegungsplans, wie er auf dem Bildschirm des Monitors sichtbar ist, dargestellt. In der linken Spalte (62) werden die für die Darstellung ausgewählten Zimmer-Nummern angezeigt. Die Fig. 3 zeigt eine Reihe von Zimmer-Nummern, z. B. (103), (104), (105) usw. In der obersten Zeile (64) der Darstellung werden die Monatsangabe, ein Hinweis worauf sich die Darstellung bezieht, nämlich auf den Zimmer-Belegungsplan, und die Zimmerkategorie, z.B. Doppelzimmer, angezeigt. Die nächste Zeile (65) enthält jeweils die Ziffer eines Tages des Monats. Jeder Ziffer ist eine nicht näher bezeichnete Spalte zugeordnet. Jeder Zimmer-Nummer ist eine Zeile zugeordnet. In den Zeilen sind in Form von Balkendiagrammen die Belegungszeiten dargestellt, wobei in der Mitte des Balkendiagramms der Name des Gastes angezeigt wird. Der Name wird zentriert im Balkendiagramm angezeigt, bei kürzeren Belegungszeiten wird er gekürzt oder bei 1-Tagesbelegungen ganz weggelassen. In den unteren Zeilen sind die Markierungen für das "Blättern" tage-, wochen- oder monatsweise angezeigt. Diese Felder müssen mit Maus, Light-Pen oder Tastatur angesteuert werden, will man innerhalb des Planes "Blättern", ohne die Sondertasten (F3) bis (F10) zu benutzen.

Die Fig. 4 zeigt eine im Rahmen des Zimmer-Belegungsplans mögliche Darstellung von Informationen über einen Gast. Diese Darstellung wird der Belegungsplandarstellung zum Teil überlagert, da sie nicht den gesamten Bildschirm benötigt.

In der in Fig. 3 gezeigten Darstellung des Zimmer-Belegungsplanes werden bereits getätigte Reservierungen/ Buchungen/Optionen (je nach vereinbartem Bitmuster) gezeigt. Diese können durch die beschriebenen Schritte (32) bis (37) verschoben (Umbuchungen) oder Informationen über Zimmer oder Gäste abgerufen werden.

Unter entsprechender Anpassung läßt sich das oben beschriebene Verfahren auch für die Netzplantechnik einsetzen. Für eine Produktionsanlage können Fertigungszeiten, z.B. Maschinenbelegungszeiten vorgegeben und bei Bedarf geändert werden. Eine ON-LINE-Überwachung und Steuerung von Maschinenarbeitszeiten und Transportzeiten ist möglich. Von an Transportgeräten und/ oder Maschinen angeordneten Gebern, die die Betätigungszeiten feststellen, können insbesondere die Datenstrings unmittelbar beeinflußt werden. Eine Abrufung und Überwachung über einen Monitor ist dann leicht möglich. Sofern die Fertigungszeiten und Transportzeiten einer Regelung unterliegen, können über den Bildschirm Sollzeiten eingegeben werden.

Die durch die Länge des Datenstrings gewonnene Adresse kann insbesondere als relative Adresse verwendet werden.

## Patentansprüche

1. Verfahren zur Zuordnung von Datensätzen zu Zeitwerten einer zeitlichen Reihenfolge,
**dadurch gekennzeichnet,**
daß die Zeitwerte jeweils als Datenstrings in einem Feld gespeichert werden, daß die Auslesung eines Zeitwerts mit dem Anfang des Datenstrings beginnt und bis zum ausgewählten Zeitwert erfolgt und daß der Zeit der Auslesung vom Anfang des Datenstrings bis zum ausgewählten Zeitwert jeweils eine Speicheradresse zugeordnet ist, die mindestens einen Datensatz adressiert.

2. Verfahren nach Anspruch 1,
**dadurch gekennzeichnet,**
daß im Datenstring jeweils eine Gruppe von Bits zur Unterscheidung der Einheiten der Zeitfolge vorgesehen ist.

3. Verfahren nach Anspruch 1 oder 2,
**dadurch gekennzeichnet,**
daß die Zeitwerte als Balkendiagramm interaktiv auf einem Bildschirm eines Digitalrechners dargestellt werden.

4. Verfahren nach einem oder mehreren der vorhergehenden Ansprüche,
**dadurch gekennzeichnet,**
daß die durch die Auslesezeit des Datenstrings gebildete Adresse in mindestens einen Befehl des Digitalrechners eingefügt wird.

5. Verfahren nach einem oder mehreren der vorhergehenden Ansprüche,
**dadurch gekennzeichnet,**
daß der Beginn und das Ende eines Datenstrings über die Darstellung eines Balkendiagramms auf einem Bildschirm mittels eines Cursors festgelegt wird.

6. Verfahren nach Anspruch 5,
**dadurch gekennzeichnet,**
daß der Cursor mittels einer Maus-Steuerung auf den Beginn und das Ende eines einem Datenstring zugeordneten Balkendiagramms auf dem Bildschirm zur Festlegung der Länge des Datenstrings positionierbar ist.

7. Verfahren nach einem oder mehreren der vorhergehenden Ansprüche,
**dadurch gekennzeichnet,**
daß der Datenstring von einem Geber erzeugt wird, der mit einer Fertigungs- oder Transportmaschine verbunden ist.

8. Verfahren nach einem der vorhergehenden Ansprüche,
**dadurch gekennzeichnet,**
daß die Bitgruppen mittels Eingabemitteln wie Maus in der Wertigkeit verändert werden.

## Claims

1. Method for assigning data records to times in a time sequence,
**wherein**
said times are stored as data strings in a field, a given time is read out from the beginning of a data string up to the selected time, and a storing address is assigned to the time that is read out from the beginning of the data string up to the selected time, where the storing address addresses at least one data record.

2. A method according to Claim 1,
**wherein**
the data string contains a group of bits to distinguish the units of the time sequence.

3. A method according to Claim 1 or 2,
**wherein**
the times are displayed interactively as a bar chart on a screen of a digital computer.

4. A method according to at least one of the previous claims,
**wherein**
the address formed by the time read out of the data string is inserted in at least one instruction of the digital computer.

5. Method according to at least one of the previous claims,
**wherein**
the beginning and end of a data string are defined by means of a cursor applied to a bar chart displayed on a screen.

6. A method according to Claim 5,
**wherein**
the cursor can be positioned by means of a mouse control to the beginning and end of a bar chart on the screen that is assigned to a data string in order to define the length of said data string.

7. A method by at least one of the previous claims,
**wherein**
the data string is generated by a sensor that is attached to a production or transport machine.

8. A method according to one of the previous claims,
**wherein**
the value of the bit groups can be changed by means of input media such as a mouse.

## Revendications

1. Procédé pour associer des jeux de données à des valeurs temporelles dans une suite chronologique, caractérisé en ce que les valeurs temporelles sont enregistrées dans un champ chaque fois sous la forme d'une chaîne de données, la lecture d'une valeur temporelle commençant par le début de la chaîne de données jusqu'à la valeur temporelle sélectionnée et le temps de la lecture du début de la chaîne de données jusqu'à la valeur choisie étant associé à une adresse de mise en mémoire qui adresse au moins un jeu de données.

2. Procédé selon la revendication 1, caractérisé en ce que dans la chaîne de données il est prévu chaque fois un groupe de bits pour distinguer les unités de la suite chronologique.

3. Procédé selon la revendication 1 ou 2, caractérisé en ce que les valeurs temporelles sont représentées de manière interactive comme diagrammes en barres sur l'écran image d'un calculateur numérique.

4. Procédé selon une ou plusieurs des revendications précédentes, caractérisé en ce que l'adresse formée par le temps de lecture de la chaîne de données contient au moins un ordre du calculateur numérique.

5. Procédé selon une ou plusieurs des revendications précédentes, caractérisé en ce que le début et la fin d'une chaîne de données se fixent par la représentation d'un diagramme en barres sur un écran image à l'aide d'un curseur.

6. Procédé selon la revendication 5, caractérisé en ce que le curseur peut être positionné avec la souris au début et à la fin d'un diagramme en barres associé à une chaîne de données, sur l'écran, pour déterminer la longueur de la chaîne de données.

7. Procédé selon une ou plusieurs des revendications précédentes, caractérisé en ce que la chaîne de données est générée par un capteur relié à une machine de fabrication ou de transport.

8. Procédé selon l'une des revendications précédentes, caractérisé en ce qu'on modifie la valeur des groupes de bits à l'aide de moyens d'entrée tels qu'une souris.
